# EUROPEAN PATENT SPECIFICATION

(11) **EP 0 742 138 B1**
(45) Date of publication and mention of the grant of the patent: **23.01.2002**
(21) Application number: 96200474.3
(22) Date of filing: 24.02.1996
(51) Int. Cl.: B62M 7/06, B62K 25/32

(54) **Rear suspension arrangement for motor vehicles**
Anordnung der hinteren Aufhängung eines Kraftfahrzeuges
Disposition de la suspension arrière d'un véhicule automobile

(30) Priority: 10.05.1995 IT MI950937
(43) Date of publication of application: 13.11.1996
(73) Proprietor: PIAGGIO & C. S.p.A., 56025 Pontedera (Pisa) (IT)
(72) Inventor: Masut, Lucio, 56031 Bientina (Pisa) (IT)
(74) Representative: Fusina, Gerolamo

(56) References cited:
- DE-C- 822 212
- FR-A- 1 051 427
- FR-A- 2 645 823
- GB-A- 735 618
- GB-A- 783 939
- GB-A- 1 477 479
- GB-A- 1 567 774
- PATENT ABSTRACTS OF JAPAN vol. 014, no. 058 (M-0930), 2 February 1990 & JP 01 282084 A (YAMAHA MOTOR CO LTD), 13 November 1989,

## Description

This invention relates to a rear suspension arrangement for motor vehicles.

In motor vehicles the presence of vibration, whether considerable or not, very negatively influences the behaviour of their constituent devices and is also the cause of consequent noise. It is therefore important to achieve maximum reduction of the unsuspended masses in order to eliminate vibration and the noise largely deriving from it. At the same time, reducing the unsuspended masses maximizes the vehicle ground force and hence improves its road holding.

These problems have so far given rise to various solutions the purpose of which is to minimize unsuspended masses in order to reduce the acceleration transmitted to the vehicle by the road contour.

Some solutions, especially in the scooter field, have been developed in the sense of maintaining the entire engine oscillating but altering the cylinder arrangement and the degree of engine balance, whereas others, more of motorcycle origin, derive from various methods for fixing the engine to the frame. In one example of this second type of solution, an arrangement is proposed in which the unit comprising the engine is fixed rigidly to the frame, whereas the unit comprising the transmission and rear wheel is connected to the frame via an interposed arm or connecting rod. This arm is hinged at one end to a central region of the frame and at the other end to the side of the engine crankcase in its lower region. A spring damper unit is also provided between the end part of the transmission casing and the frame, to cooperate in limiting vibration. In further known solutions, rubber elements or corresponding elastic elements have also been located at pivotal and support points. This further provision has not totally solved the problem in that drawbacks in terms of the life of the elastic elements have arisen, these latter having then been avoided by instead using materials which are not totally suitable for this purpose, hence in practice obtaining only poor insulation against vibration.

In any event, such a solution means that the unit comprising the transmission and rear wheel can oscillate freely about the arm.

DE-C-822212 relates to a rear suspension arrangement for motor vehicles according to the preamble of claim 1.

GB-A-1567774 shows a motorcycle in which the engine is attached to the frame by two long bolts. The frame comprises a plurality of tubes.

GB-A-735618 refers to a rear wheel suspension for motor vehicles having the casing of a rockable arm which embraces the engine.

GB-A-783939 shows a motor bicycle with metal frame having a connection between an extension of the arm and the other end of the drive shaft.

An object of the present invention is to provide a parts arrangement in the rear region of the motor vehicle by which acceleration transmitted by the engine is suppressed.

A further object is to minimize ground forces over the entire frequency range normally encountered in road contours.

These objects are attained according to the present invention by a rear suspension arrangement for motor vehicles according to claim 1.

The characteristics and advantages of a rear suspension arrangement for motor vehicles according to the present invention will be more apparent from the detailed description given hereinafter by way of non-limiting example with reference to the accompanying schematic drawings, on which:
Figure 1 is a schematic elevation of a rear suspension arrangement for a motor vehicle according to the present invention;
Figure 2 is a plan view from above of the arrangement of Figure 1; and
Figure 3 is a plan view from above of a second arrangement according to the present invention.

The drawings show by way of example two rear suspension arrangements for a motor vehicle, in accordance with the present invention.

It should be noted that the term "motor vehicles" as used herein means motorscooters and motorcycles provided either with automatic transmission or with mechanical transmission plus change-speed gear.

In the figures the reference numeral 11 indicates schematically a substantial rear part of the frame of a motor vehicle of the aforestated meaning, to which frame part 11 there are connected respectively an engine 12 with relative carburettor 13 and a transmission unit 14, in the form of an arm, for transmitting rotation to a rear wheel 15.

There are also provided a single spring damper unit 16, located between the end part of the casing 17 of the transmission unit 14 and an overlying part 18 of the frame 11, which collaborates in limiting vibration.

According to the present invention, a new arrangement is provided in that the engine 12, besides being pivoted at 19 to a central portion 20 of the frame 11, is also pivoted at 21 to a bracket 22 fixed to and suspended from the overlying part 18 of said frame 11. In this manner, stable positioning of the engine 12 and of its associated parts, for example the relative carburettor 13, is achieved.

In addition, according to the present invention the arm 14, containing the transmission, is supported on and rockable by way of bearings (not shown) about a drive shaft, indicated schematically by 23. These bearings are contained on one side in the casing 17 of the rockable arm 14 and on the other side in one end of an extension 24 thereof. In this respect, the extension 24 of the arm 14 is joined to or formed in one piece with the actual arm and embraces the engine 12, to form the support for one end of the drive shaft 23.

The axis of the drive shaft 23 hence coincides with the axis of rotation of the transmission arm 14, this latter being the only part which can rock about it, to drag the rear wheel 15.

The spring damper unit 16, which in the example is provided on only one side of the wheel, is placed therebetween.

For example the transmission contained within the arm 14 can be of automatic type comprising pulleys, indicated schematically by 25, expandable towards a further reduction gear, indicated schematically by 26, which rotates the rear wheel 15.

In this manner a rear suspension arrangement is achieved with a rockable arm containing only the stepless speed variation unit 25, or corresponding mechanical transmission, and the final reduction gear 26. This arrangement is absolutely independent of the further masses in play, such as the engine, the alternator, the drive pulley for the speed variation unit or the like, etc., which are fixed to the frame by the pivotal points or hinges 19 and 21. For example, with such an arrangement according to the invention, the carburettor 13 is also minimally influenced by the acceleration due to the oscillation of the various reduced unsuspended elements, so preventing any possible related carburation difficulty.

The alternative arrangement shown in the second embodiment of Figure 3 behaves in an entirely similar manner, in accordance with the principles governing the present invention.

In this embodiment, in which equal elements are indicated by identical reference numerals, in addition to the aforegoing there is also provided a second spring damper unit 16a. In particular, the unit 16a is positioned on the other side of the rear wheel 15, on a second extension 24a of the arm 14, joined to the described first extension 24. Said spring damper unit 16a is hence located between the overlying part 18 of the frame 11 and the second extension 24a of the arm 14 carrying the transmission.

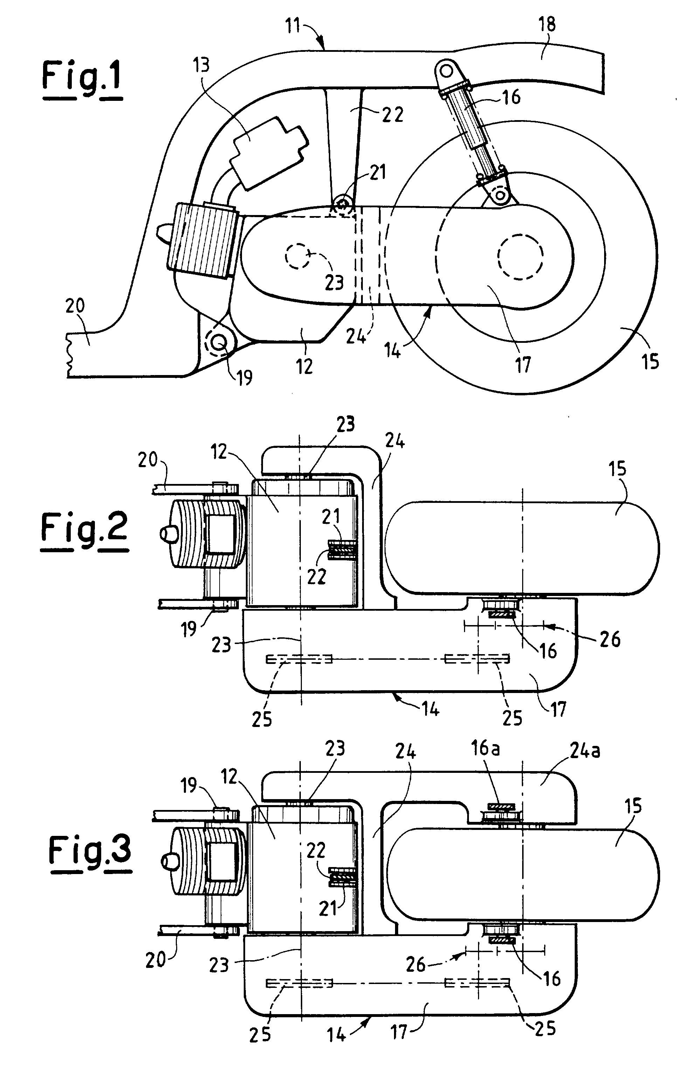

In this manner a rear suspension arrangement for motorcycles is achieved having a double damper in contrast to that shown in the first embodiment of Figures 1 and 2, in which a single damper is present.

In both cases the axis of the rockable arm 14 coincides with the axis of the drive shaft 23, on which the vehicle transmission drive pulley is also provided.

It can again be seen that there is a considerable reduction in unsuspended masses in the rear part of the motor vehicle.

## Claims

1. A rear suspension arrangement for motor vehicles in which in a rear part of a motor vehicle frame (11) there are provided at least one engine (12) with relative carburetor (13), a drive shaft (23) with relative transmission unit (14), in the form of an arm, for transmitting rotation to a rear wheel (15), and at least one spring damper unit (16) located between the casing (17) of said arm of the transmission unit (14) and an overlying part (18) of said frame (11), said arm (14) containing the transmission being supported on and rockable about said drive shaft (23), **characterized in that** said engine (12) is connected at its forward lower point by a pivot (19) to a central portion (20) of said frame (11) and is connected at its rear upper portion by a second pivot (21) to an overlying part (18) of said frame (11), to said casing (17) of said rockable arm (14) there is connected an extension (24) which embraces said engine and supports one end of said drive shaft (23), the other end of said drive shaft (23) being supported within said rockable arm (14), said overlying part (18) of said frame (11) comprises a bracket (22) joined to and suspended from said overlying part (18), said central portion (20) and said overlying part (18) of said frame (11) being provided as one piece so as to embrace said engine (12), said transmission unit (14) and said rear wheel (15).

2. An arrangement as claimed in claim 1, **characterised by** comprising a second spring damper unit (16a) positioned on the other side of said rear wheel (15) between a second rockable arm extension (24a), joined to said first extension (24) to receive the rotation axle of said rear wheel (15), and said overlying part (18) of said frame (11).

3. An arrangement as claimed in any one of the preceding claims, **characterised in that** the axis of said drive shaft (23) coincides with the axis of rotation of said transmission arm (14).

4. An arrangement as claimed in any one of the preceding claims, **characterised in that** said transmission is an automatic transmission comprising expandable pulleys.

5. An arrangement as claimed in any one of the preceding claims, **characterised in that** said transmission is a mechanical transmission.

## Patentansprüche

1. Hintere Aufhängungsanordnung für Kraftfahrzeuge, bei der in einem hinteren Teil eines Kraftfahrzeugrahmens (11) mindestens ein Motor (12) mit einem zugeordneten Vergaser (13), eine Antriebswelle (23) mit einer zugeordneten Getriebeeinheit (14) in der Form eines Arms zum Übertragen einer Drehung auf ein Hinterrad (15) und mindestens eine Feder-Dämpfer-Einheit (16) vorgesehen sind, die zwischen dem Gehäuse (17) des Arms der Getriebeeinheit (14) und einem darüberliegenden Teil (18) des Rahmens (11) angeordnet ist, wobei der Arm (14), der das Getriebe enthält, auf der Antriebswelle (23) getragen und um diese herum schwenkbar ist, **dadurch gekennzeichnet, daß** der Motor (12) an seinem vorne liegenden unteren Punkt durch einen Drehzapfen (19) mit einem zentralen Abschnitt (20) des Rahmens (11) verbunden ist und an seinem hinteren oberen Abschnitt durch einen zweiten Drehzapfen (21) mit einem darüberliegenden Teil (18) des Rahmens (11) verbunden ist, wobei mit dem Gehäuse (17) des schwenkbaren Arms (14) eine Erweiterung (24) verbunden ist, die den Motor umschließt und ein Ende der Antriebswelle (23) trägt, wobei das andere Ende der Antriebswelle (23) in dem schwenkbaren Arm (14) getragen ist, wobei der darüberliegende Teil (18) des Rahmens (11) einen Träger (22) umfaßt, der mit dem darüberliegenden Teil (18) verbunden und von diesem aus aufgehängt ist, wobei der zentrale Abschnitt (20) und der darüberliegende Teil (18) des Rahmens (11) als ein Stück vorgesehen sind, so daß der Motor (12), die Getriebeeinheit (14) und das Hinterrad (15) umschlossen sind.

2. Anordnung nach Anspruch 1, **dadurch gekennzeichnet, daß** sie eine zweite Feder-Dämpfer-Einheit (16a) umfaßt, die auf der anderen Seite des Hinterrades (15) zwischen einer zweiten schwenkbaren Armerweiterung (24a), die mit der ersten Erweiterung (24) verbunden ist, um die Drehachse des Hinterrades (15) aufzunehmen, und dem darüberliegenden Teil (18) des Rahmens (11) angeordnet ist.

3. Anordnung nach einem der vorhergehenden Ansprüche, **dadurch gekennzeichnet, daß** die Achse der Antriebswelle (23) mit der Drehachse des Getiebearms (14) zusammenfällt.

4. Anordnung nach einem der vorhergehenden Ansprüche, **dadurch gekennzeichnet, daß** das Getriebe ein Automatikgetriebe ist, das ausdehnbare Riemenscheiben aufweist.

5. Anordnung nach einem der vorhergehenden Ansprüche, **dadurch gekennzeichnet, daß** das Getriebe ein mechanisches Getriebe ist.

## Revendications

1. Agencement formant suspension arrière pour véhicules automobiles, dans lequel sont prévus, dans une partie arrière du châssis (11) d'un véhicule, au moins un moteur (12) et un carburateur (13) qui lui est associé, un arbre de roue motrice (23) avec l'unité de transmission (14) qui lui est associée, se présentant sous la forme d'un bras, destiné à transmettre la rotation à une roue arrière (15), et au moins une unité d'amortissement à ressort (16) située entre le carter (17) du bras de l'unité de transmission (14) et une partie de recouvrement (18) du châssis (11), le bras (14) contenant la transmission qui est supportée sur l'arbre de roue motrice (23), et peut basculer autour de celui-ci, **caractérisé en ce que** le moteur (12) est relié, en son point inférieur, avant, par un pivot (19), à une partie centrale (20) du châssis (11) et est relié, au niveau de sa partie supérieure arrière, par un deuxième pivot (21), à une partie de recouvrement (18) du châssis (11), **en ce qu'**au carter (17) du bras basculant (14) est relié un prolongement (24) qui renferme le moteur et sert de support à une extrémité de l'arbre de roue motrice (23), l'autre extrémité de l'arbre de roue motrice (23) étant montée à l'intérieur du bras basculant (14), **en ce que** la partie de recouvrement (18) du châssis (11) comprend une bride (22) assemblée à la partie de recouvrement (18) et suspendue à partir d'elle, la partie centrale (20) et la partie de recouvrement (18) du châssis (11) ne constituant qu'un seul élément afin de renfermer le moteur (12), l'unité de transmission (14) et la roue arrière (15).

2. Agencement selon la revendication 1, **caractérisé en ce qu'**il comprend une deuxième unité d'amortissement à ressort (16a) positionnée de l'autre côté de la roue arrière (15), entre un deuxième prolongement de bras basculant (24a), assemblé au premier prolongement (24) pour recevoir l'essieu de rotation de la roue arrière (15), et la partie de recouvrement (18) du châssis (11).

3. Agencement selon l'une quelconque des revendications précédentes, **caractérisé en ce que** l'axe de l'arbre de roue motrice (23) coincide avec l'axe de rotation du bras de transmission (14)

4. Agencement selon l'une quelconque des revendications précédentes, **caractérisé en ce que** la transmission est une transmission automatique comprenant des poulies extensibles.

5. Agencement selon l'une quelconque des revendications précédentes, **caractérisé en ce que** la transmission est une transmission mécanique.
